# EUROPÄISCHE PATENTSCHRIFT

(11) **EP 1 453 133 B1**
(45) Veröffentlichungstag und Bekanntmachung des Hinweises auf die Patenterteilung: **30.09.2009**
(21) Anmeldenummer: 04000535.7
(22) Anmeldetag: 13.01.2004
(51) Int. Cl.: H01M 8/24, H01M 8/02, C25B 9/20

(54) **Brennstoffzelle bzw. Elektrolyseur sowie zugehöriges Verfahren zu deren Herstellung**
Fuel cell or electrolyzer and process for its production
Pile à combustible ou électrolyseur et procédé de fabrication

(30) Priorität: 21.01.2003 DE 10302122
(43) Veröffentlichungstag der Anmeldung: 01.09.2004
(73) Patentinhaber: Bayerische Motoren Werke Aktiengesellschaft, 80809 München (DE); ElringKlinger AG, 72581 Dettingen/Erms (DE)
(72) Erfinder: Finkenwirth, Olav, 80801 München (DE); Zerfass, Hans-Rainer, Dr., 65232 Taunusstein-Neuhof (DE)
(74) Vertreter: nospat Patent- und Rechtsanwälte Naefe Oberdorfer Schmidt

(56) Entgegenhaltungen:
- WO-A-99/54131
- DE-A- 19 960 516
- US-B1- 6 492 053

## Beschreibung

Die Erfindung betrifft eine Brennstoffzelle bzw. einen Elektrolyseur nach dem Oberbegriff des Anspruchs 1 und ein Verfahren zur Herstellung der Brennstoffzelle bzw. des Elektrolyseurs nach dem Oberbegriff des Anspruchs 23.

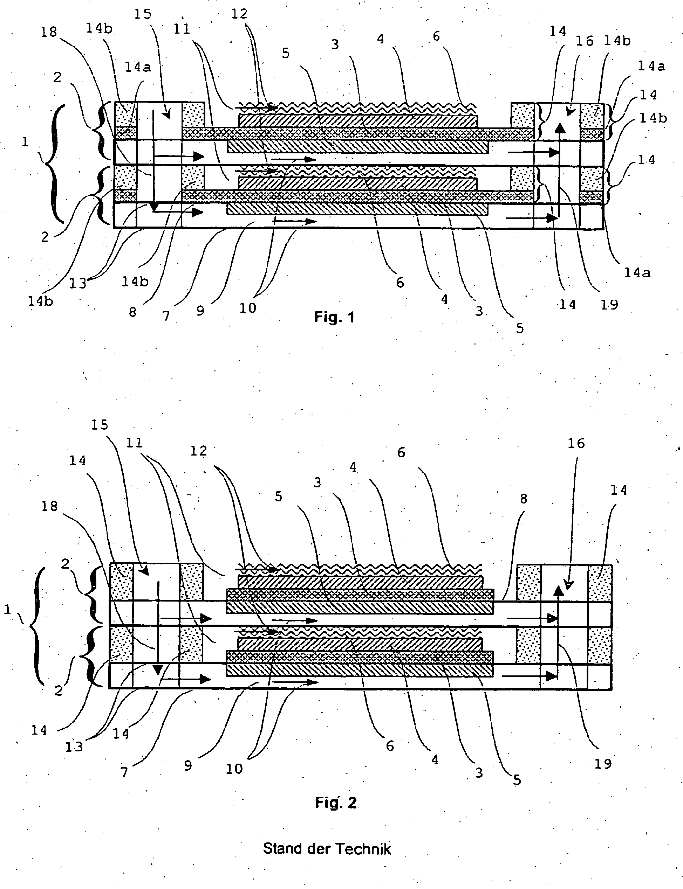

Aus dem Stand der Technik ist ein Brennstoffzellenstapel 1 gemäß Fig. 2 bekannt. Dieser Brennstoffzellenstapel 1 weist zwei oder mehrere Einzelbrennstoffzellen 2 auf, welche turmartig übereinander gestapelt sind. Die Brennstoffzellen 2 besitzen eine Elektrolytschicht 3, eine auf der einen Flachseite der Elektrolytschicht 3 angeordnete Kathodenschicht 4 und eine auf der anderen Flachseite der Elektrolytschicht 3 angeordnete Anodenschicht 5. Zur Kontaktierung einer Nachbarbrennstoffzelle 2 sitzt auf der Kathodenschicht 4 eine Kontaktierungsschicht 6 auf. Weiterhin weist jede Einzelbrennstoffzelle 2 eine erste Separatorplatte 7 und eine zweite Separatorplatte 8 auf. Die Separatorplatten 7, 8 umgrenzen einen Brenngasraum 9, wobei die Anodenschicht 5 in den Brenngasraum 9 hineinragt. Der Brenngasraum 9 steht derart mit der Anodenschicht 5 in Verbindung, dass Brenngas, welches den Brenngasraum 9 durchströmt (Pfeilrichtung 10) mit der freien Oberfläche der Anodenschicht 5 in Kontakt gelangen kann.

Zwischen einer zweiten Separatorplatte 8 einer Brennstoffzelle 2 und einer ersten Separatorplatte 7 einer benachbarten Brennstoffzelle 2 ist ein Oxidationsgasraum 11 ausgebildet, welcher von Oxidationsgas (Pfeilrichtung 12) durchströmbar ist, sodass die freie Oberfläche der Kathodenschicht 4, welche in den Oxidationsgasraum 11, hineinragt, mit Oxidationsgas anströmbar ist. Die Kontaktierungsschicht 6, welche - wie oben beschrieben - mit ihrer einen Flachseite mit der Kathodenschicht 4 in Kontakt steht, berührt mit ihrer zweiten Flachseite eine zum Oxidationsgasraum 11 hingewandte Flachseite der zweiten Separatorplatte 8 der benachbarten Einzelbrennstoffzelle 2. Alle Brenngasräume 9 eines Brennstoffzellenstapels 1 stehen über korrespondierende Öffnungen 13 in den ersten und zweiten Separatorplatten 7, 8 miteinander in Verbindung. Die Brenngasräume 9 sind im Bereich zwischen einer zweiten Separatorplatte 8 und einer ersten Separatorplatte 7 einer benachbarten Einzelbrennstoffzelle 2 mittels einer Dichtschicht 14 gasdicht von den Oxidationsgasräumen 11 getrennt, sodass ein Brennstoffzufuhrkanal 15 und ein Abführkanal 16 für die Reaktionsprodukte ausgebildet ist. Somit kann Brenngas entlang der Pfeilrichtung 18 den Brenngasräumen 9 zugeführt werden und durchströmt diesen entlang der Pfeilrichtung 10, wobei das Brenngas in einer Brennstoffzelle 2 entlang der Anodenschicht 5 oxidiert wird und als Reaktionsprodukt den Brennstoffzellenstapel 1 entlang der Pfeilrichtung 19 wieder verlassen kann. Über entsprechend ausgebildete Zuführ- und Abführkanäle wird analog zum Brenngas das Oxidationsgas durch die Oxidationsgasräume 11 geleitet.

Die Separatorplatten 7, 8 eines vorbeschriebenen Brennstoffzellenstapels 1 haben somit einerseits die Funktion, die in Reihe geschalteten Einzelbrennstoffzellen 2 elektrisch leitend zu verbinden und zum anderen die Separierung von Brenn- und Oxidationsgas sicherzustellen. Zu diesem Zweck sind die Separatorplatten 7, 8 (auch Bipolarplatten oder Interkonnektorplatten genannt) aus einem gasdichten, insbesondere Brenn- und Oxidationsgas-dichten, und elektronisch leitfähigen Material ausgebildet, wobei sich insbesondere chromhaltige Legierungen, ferritische Stähle und Perowskite bewährt haben. Um eine zuverlässige Separierung der Oxidations- und der Brenngase zu gewährleisten, ist es erforderlich, jeweils zwischen der zweiten Separatorplatte 8 einer ersten Brennstoffzelle 2 und der ersten Separatorplatte 7 einer benachbarten Brennstoffzelle 2 für eine zuverlässige Abdichtung des Zuführkanals 15 und der Produktgasabführkanäle vom Oxidationsgasraum 11 zu sorgen.

Aus dem Stand der Technik ist es bekannt, die Dichtschicht 14 beispielsweise aus Glaskeramikloten auszubilden. Diese Glaskeramiklote werden üblicherweise als Pasten oder angelöste Folien vor dem Fügen eines Brennstoffzellenstapels 1 auf die relevanten Dichtflächen der Separatorplatten 7, 8 aufgetragen.

Diese üblicherweise bei Festelektrolytbrennstoffzellen zum Einsatz kommenden Dichtungsmaterialien (Glaskeramiklote) haben zwei sich gegenläufig beeinflussende Eigenschaften. Der thermische Ausdehnungskoeffizient des Dichtungsmaterials ist im Verhältnis zu den Ausdehnungskoeffizienten der meisten für die Bipolarplatten 7, 8 verwendeten Materialien deutlich kleiner. Dies kann beim schnellen Aufheizen des Brennstoffzellenstapels 1 zu thermisch induzierten Spannungsrissen in der Dichtschicht 14 und damit zum Versagen ihrer Dichtwirkung führen. Dies ist insbesondere bei Festelektrolytbrennstoffzellen (so genannte SOFC-Stapel), welche im Hochtemperaturbereich arbeiten, besonders kritisch. Insbesondere für Festelektrolytbrennstoffzellen, welche durch häufiges In-Betrieb-Nehmen und Abschalten belastet sind, stellt dies ein bislang nur unbefriedigend gelöstes Problem dar.

Aus dem Stand der Technik ist es bekannt, den Ausdehnungskoeffizienten der Dichtungsmaterialien durch Zusatz von Metall- oder Metalloxidbestandteilen in die Dichtungsmasse zu erhöhen. Diese Zusätze führen aber zwangsläufig zu einer Herabsetzung des elektrischen Widerstands des Dichtungsmaterials bei den typischerweise hohen Betriebstemperaturen einer Festelektrolytbrennstoffzelle. Hierdurch entstehen über die Dichtungsschicht 14 zwischen einer zweiten Separatorplatte 8 und einer ersten Separatorplatte 7 zweier benachbarter Einzelbrennstoffzellen 2 unerwünschte Kriechströme, welche den elektrischen Wirkungsgrad eines Brennstoffzellenstapels 1 unerwünscht verschlechtern.

Ein weiterer Nachteil der aus dem Stand der Technik gemäß Fig. 2 bekannten Dichtung ist, dass die bekannten Materialien für die Dichtungsschicht 14 ein im Vergleich zur Kontaktierungsschicht 6 anderes Kompressionsverhalten und /oder eine andere Schrumpfungscharakteristik aufweisen, wodurch es bei der Montage eines Brennstoffzellenstapels 1 zu unerwünschten Ungenauigkeiten kommt, welche eine zuverlässige Kontaktierung der Kontaktierungsschicht 6 mit einer benachbarten Separatorplatte 7 in Frage stellen kann. Weiterhin ist von Nachteil, dass das Bereitstellen einer geeigneten Dichtungsschicht 14 vor dem Fügen des Brennstoffzellenstapels 1 aufwendig und teuer ist, weil beispielsweise ein Dichtmittelstrang herzustellen ist oder im Fall einer folienartigen Ausbildung der Dichtungsschicht 14 diese separat herzustellen und vor dem Fügeprozess zu positionieren bzw. einzulegen ist.

Aus der DE 19515457 C1 ist ein Dichtungsaufbau für eine Brennstoffzelle bekannt, bei dem die Elektrolytschicht aus einer mit Elektrolyt getränkten Elektrolytmatrix besteht und die Elektrolytmatrix im Dichtungsbereich über die Elektroden hinaus verlängert ausgebildet ist, wobei im Dichtungsbereich die Tränkung der Elektrolytmatrix mit einem dem Elektrolyten chemisch verwandten Material erfolgt, welches bei der Arbeitstemperatur der Brennstoffzelle fest ist. Die vorgeschlagene Lösung bezieht sich jedoch auf eine so genannte Schmelzkarbonat-Brennstoffzelle, welche einen in einer Elektrolytmatrix flüssig vorhandenen Schmelzelektrolyten aufweist. Bei dieser Art von Brennstoffzellen spricht man üblicherweise von einem Nassdichtungsbereich, da der im Betriebszustand Schmelzflüssige Elektrolyt im Randbereich einen Nassbereich bildet, den es abzudichten gilt. Diese Lösung kann jedoch nicht auf eine Festelektrolytbrennstoffzelle übertragen werden, da bei einer solchen Festelektrolytbrennstoffzelle (SOFC: Solid Oxid Fuel Cell) keine so genannten Nasselektroden oder Nasselektrolyten existieren und somit das der DE 19515457 C1 zugrunde liegende Problem Bauart-bedingt gar nicht auftritt.

Aus der DE 19960516 A1 ist eine Dichtung für eine Brennstoffzelle bekannt, bei der eine Elektrolytmembran in den Randdichtungsbereich zwischen zwei Separatorplatten hinein verlängert ist und auf der Elektrolytmembran eine zweischichtige Gummidichtung angeordnet ist. Für den Dichtungsaufbau wird vorgeschlagen, die eine Schicht aus weichem Gummischaum und die zweite Schicht aus einem härteren Gummi, z. B. Silikongummi oder Butylgummi auszubilden. Diese Druckschrift befasst sich mit einer so genannten Niedertemperatur-Brennstoffzelle mit einem Polymermembranelektrolyten. Diese so genannten Niedertemperatur-Brennstoffzellen haben Betriebstemperaturen, welche im Bereich zwischen 60°C und 80°C liegen. Solche Brennstoffzellen sind mit einer Festelektrolytbrennstoffzelle hinsichtlich ihrer Betriebstemperaturen nicht vergleichbar, da üblicherweise Festelektrolytbrennstoffzellen in Temperaturbereichen zwischen 700 und 1100 °C betrieben werden. Die vorgeschlagene Dichtung aus der DE 19960516 A1 kann somit aufgrund der hohen Betriebstemperaturen einer Festelektrolytbrennstoffzelle nicht auf diese übertragen werden.

Aus der JP 10092450 A ist als Stand der Technik ein Brennstoffzellenaufbau bekannt, welcher dem gemäß der Fig. 2 ähnlich ist.

Aus der WO 99/54131 A1 ist eine Brennstoffzelle bekannt, welche einen zweischichtigen Dichtungsaufbau zwischen zwei, Seperatorplatten hat. Der zweischichtige Dichtungsaufbau besitzt eine Dichtungsschicht und eine Isolierschicht. Die Isolierschicht ist aus einem Glaskeramiklot hergestellt.

Aufgabe der Erfindung ist es, für eine Brennstoffzelle bzw. einen Elektrolyseur, insbesondere eine Festelektrölytbrennstoffzelle anzugeben, welcher unempfindlich ist gegenüber thermischen Spannungen und gleichzeitig eine elektrische, insbesondere eine elektronische Isolierung, d. h. eine Undurchlässigkeit für Elektronen, sicherstellt. Weiterhin soll die erfindungsgemäße Brennstoffzellen einfach und kostengünstig, insbesondere gegenüber dem Stand der Technik ohne zusätzliche Arbeitsschritte herstellbar sein. Außerdem soll die Kompressibilität und/oder das Schrumpfungsverhalten eines Dichtungsaufbaus der Kontaktierungsschicht angepasst sein und somit eine erleichterte und insbesondere prozesssicherere Montage ermöglichen.

Diese Aufgabe wird mit einer Brennstoffzelle oder einem Elektrolyseur mit den Merkmalen des Anspruchs 1 und einem Verfahren zur Herstellung der Brennstoffzelle oder des Elektrolyseurs mit den Merkmalen des Anspruchs 23 gelöst. Vorteilhafte Ausführungsformen der Erfindung sind in den jeweils von den unabhängigen Ansprüchen abhängigen Ansprüchen angegeben.

Um dem mangelnden elektrischen Isolationsvermögen bestimmter Dichtungsmaterialien zu begegnen, wird im Sinne dieser Erfindung zwischen einer Separatorplatte und einer Dichtungsschicht eine dünne Keramik mittels eines thermischen Beschichtungsverfahrens aufgetragen. Bei dem Beschichtungsverfahren handelt es sich erfindungsgemäß bevorzugt um das gleiche Verfahren, mit dem auch die keramischen SOFC-Schichten, d. h. die Anoden-, Elektrolyt- und Kathodenschicht aufgetragen werden (z. B. Vakuumplasmaspritzen, atmosphärisches Plasmaspritzen, etc.). Aus fertigungstechnischer Sicht wird die Isolationskeramik in einem Arbeitsschritt gemeinsam mit dem Elektrolyten der SOFC und aus demselben Material aufgebracht.

Die keramische Isolationsschicht sollte dementsprechend einen sehr hohen elektronischen Widerstand aufweisen und im thermischen Ausdehnungsverhalten an das Separatorplattenmaterial angepasst sein. Werden die SOFCs z.B. im Vakuum-Plasmaspritzverfahren gefertigt, so kann der Applikationsprozess von Dichtflächenisolation und Elektrolyt zeitgleich oder nacheinander erfolgen. Beim Vakuumplasmaspritzen überstreicht ein Plasmabrenner ähnlich einer Lakierpistole die Oberfläche der Brennstoffzellen und deponiert bei jedem Überstreichen eine dünne Lage Elektrolytmaterial. Dieser Vorgang wird mehrere Male wiederholt, bis die gewünschte Schichtdicke des Elektrolyten erreicht ist. Wird nun der Verfahrweg des Plasmabrenners entsprechend erweitert, sodass er auch die Dichtflächen der Brennstoffzelle überstreicht, dann wird die benötigte Dichtungs-Isolationsschicht mit minimalem Mehraufwand parallel oder sequentiell appliziert. Um eine optimale Haftung der Isolationslage auf den Dichtflächen der Bipolarplatten (= Separatorplatten) zu erreichen, ist es ggfs. notwendig, deren Oberfläche aufzurauhen, z. B. mittels eines Sandstrahlverfahrens.

Die Erfindung ist besonders vorteilhaft, weil die Unterbindung elektrischer Kurz- und Kriechströme zwischen den einzelnen Zellelementen eines Brennstoffzellen-Stapels eine unabdingbare Notwendigkeit ist, um die gewünschte flächenspezifische elektrische Leistungsdichte pro Quadratzentimeter zu erreichen. Die Applikation einer elektrisch isolierenden keramischen Schicht auf den Dichtflächen der Bipolarplatten von FestelektrolytBrennstoffzellen-Stapel ermöglicht den Einsatz von elektrisch nur unzureichend isolierenden Dichtungswerkstoffen zur Separierung und Verteilung der Brenn- und Oxidationsgase, wobei diese elektrisch nur unzureichend isolierenden Dichtungswerkstoffe leichter und besser in ihrem thermischen Ausdehnungsverhalten an das Ausdehnungsverhalten der Separatorplatten anpassbar sind.

Darüber hinaus ermöglicht die Verwendung elektrisch leitender Dichtungswerkstoffe den Einsatz von Materialien, die besser an die thermischen Ausdehnungskoeffizienten der Separatorplatten angepasst sind, sodass die Wahrscheinlichkeit des Versagens der Dichtfunktion aufgrund schneller thermischer Zyklen - wie z. B. für den Einsatz einer Festelektrolytbrennstoffzelle in einer mobilen Generatoreinheit gefordert werden - vermindert wird.

Der Einsatz der besagten elektrischen Isolationsschichten ist besonders dann vorteilhaft, wenn die elektrochemisch aktive Kathoden-Elektrolyt-Anoden-Einheit (CEA oder MEA genannt) der Festelektrolytbrennstoffzelle mittels eines thermischen Beschichturigsverfahrens hergestellt wird. In diesem Fall kommt zur Applikation der Isolationsmaterialien das gleiche Fertigungsverfahren zum Einsatz wie für das Aufbringen der elektrochemisch aktiven Schichten. Eine weitere Vereinfachung des Auftragsprozesses besteht im Aufbringen des elektronisch nicht leitfähigen Elektrolyt-Materials der Festelektrolytbrennstoffzelle als elektrische Isolationsschicht parallel zur Fertigung des Elektrolyts. In beiden Fällen ist als vorangehender Arbeitsschritt lediglich das ggfs. erforderliche Aufrauhen der Oberfläche der Dichtfläche (z. B. mittels Sandstrahlen) und die Vergrößerung des Verfahrbereichs des zur Applikation der CEA eingesetzten Beschichtungswerkzeugs (z. B. des Plasmabrenners) notwendig. Diese Änderungen stellen einen minimalen Mehraufwand dar. Ein weiterer Vorteil der Verwendung von Dünnschichtkeramiken als Isolationswerkstoff ist die mögliche Anpassung ihres thermischen Ausdehnungskoeffizienten durch gezielte Materialauswahl. Der Ausdehnungskoeffizient der Isolierschicht sollte idealerweise im gesamten Einsatztemperaturbereich von Umgebungs- bis Betriebstemperatur zwischen dem der Bipolarplatten/-bleche (= Separatorplatten) und dem des Dichtungswerkstoffs liegen, sodass die Haftung der Dichtung auch bei schnellen thermischen Zyklen verbessert wird.

Im Folgenden wird die Erfindung anhand der Zeichnung beispielhaft näher erläutert. Es zeigt:
Fig. 1: einen schematischen Querschnitt durch eine erfindungsgemäße Brennstoffzelle mit einem erfindungsgemäßen Dichtungsaufbau.
Fig. 2: einen schematischen Querschnitt durch eine erfindungsgemäße Brennstoffzelle gemäß dem Stand der Technik.

Ein erfindungsgemäßer Dichtungsaufbau 14a, 14b ist für einen erfindungsgemäßen Brennstoffzellenstapel 1 gemäß Fig. 1 bestehend aus Einzelbrennstoffzellen 2, welche als Hochtemperatur-Brennstoffzellen, insbesondere als Festelektrolytbrennstoffzellen (SOFC) mit einer Elektrolytschicht 3, einer Kathodenschicht 4 und einer Anodenschicht 5 ausgebildet sind, geeignet. Die elektrisch wirksamen Schichten 3, 4, 5 sind ggf. auf einer porösen metallischen Substratschicht (nicht gezeigt) angeordnet, welche vorzugsweise als mechanisch tragende Schicht ausgebildet ist. Zudem kann durch die poröse metallische Substratschicht Brenngas zur Anodenschicht 5 gelangen. Die poröse metallische Substratschicht ist beispielsweise aus einem Nickelfilz oder einem FeCrAlY-Schaum ausgebildet. Die Anodenschicht 5 besteht beispielsweise aus einem Nickel/Yttriumstabilisieren Zirkoniumdioxid (Ni-YSZ) Cermet-Material, die Elektrolytschicht 3 ist Sauerstoffionen-leitend ausgebildet und besteht beispielsweise aus einem Y2O3-stabilisierten Zirkoniumdioxid und ist für die in der Brennstoffzelle 2 eingesetzten Reaktionsgase gasdicht ausgebildet und lediglich für O2--Ionen durchlässig. Die Kathodenschicht 4 besteht beispielsweise aus Lantan-Strontium-dotiertem Manganit (LSM). Die Kathodenschicht 4 und die Anodenschicht 5 sind als poröse Schichten mit ggf. gradierter Materialzusammensetzung und gradierter Porosität ausgebildet.

Die elektrisch wirksamen Schichten 3, 4, 5 sind als so genannte Dünnschichtkeramikschichten ausgebildet. Die Elektrolytschicht 3 weist vorteilhafterweise eine Dicke von etwa 20-50µm, insbesondere 20 µm, auf. Die Kathodenschicht 4 und die Anodenschicht 5 weisen vorzugsweise Dicken von etwa 20-50 µm auf. Die poröse metallische Substratschicht ist als tragende Schicht etwa 1000 µm dick ausgebildet. Insbesondere die Ausbildung der Elektrolytschicht 3 als Dünnschichtkeramik, durch welche die O2--Ionen wandern müssen, stellt niedrigen Materialverbrauch und niedrige elektrische Verluste in der Brennstoffzelle sicher.

Die Kontaktierungsschicht 6 besteht aus einem porösen und duktilen Material, damit ein niederohmiger Kontakt zur benachbarten Separatorplatte 7 sichergestellt ist. Eine weitere wesentliche Eigenschaft-der Dünnschichtkeramik-Elektrolytschicht 3 ist deren Gasdichtheit bei gleichzeitiger Durchlässigkeit für O²⁻-Ionen und hohem Widerstand für Elektronen.

Die Dünnschichtkeramikschichten 3, 4, 5 werden auf die poröse metallische Substratschicht vorzugsweise mittels Sprühverfahren, wie z. B. dem Plasmaspritzen, dem atmosphärischen VakuumPlasmaspritzen, dem Flammspritzen etc. schichtweise aufeinanderfolgend aufgetragen.

Erfindungsgemäß ist der Aufbau der Dichtungsschicht 14 zwischen zwei benachbarten Separatorplatten 7, 8 zumindest zweischichtig aus einer ersten Schicht 14a und einer zweiten Schicht 14b aufgebaut. Die erste Schicht 14a (Isolierschicht) ist hierbei eine elektronisch isolierende Dünnschichtkeramik aus demselben Elektrolytwerkstoff wie die Elektrolytschicht 3, welche eine vollständige elektronische Isolation zwischen benachbarten Separatorplatten 7, 8 sicherstellt. Die zweite Schicht 14b ist eine Dichtungsschicht und besteht beispielsweise aus einem Glaskeramiklot oder einem Alkali-silicathaltigen Hochtemperaturkeramikklebstoff, welches(r) durch geeignete Zusätze hinsichtlich seiner thermischen Ausdehnungseigenschaften an die thermischen Ausdehnungseigenschaften der Separatorplatten 7, 8 angepasst ist. Geeignete Materialzusätze für ein solches Glaskeramiklot sind Metall- oder Metalloxidbestandteile.

Eine relativ hohe elektrische Leitfähigkeit des verwendeten Dichtungsmaterials kann erfindungsgemäß jedoch ohne weiteres in Kauf genommen werden, da die erste Dichtungsschicht 14a die elektrische Isolierung von benachbarten Separatorplatten 7, 8 in ausreichendem Maße sicherstellt. Auch kann beim erfindungsgemäß zumindest zweischichtigen Dichtungsaufbau 14a, 14b die Kompressibilität und/oder das Schrumpfungsverhalten der Dichtungsschicht 14b durch geeignete Dichtmaterialauswahl an die Kompressibilität und/oder das Schrumpfungsverhalten der Kontaktierungsschicht 6 angepasst werden, sodass beim Fügen der Einzelbrennstoffzellen 2 zu einem Brennstoffzellen-Stapel 1 die Kontaktierung der Kontaktierungsschicht 6 mit einer benachbarten Separatorplatte 7 auch nach dem erstmaligen Aufheizen der Brennstoffzellen auf Betriebstemperatur (700-1100°C) sicher gewährleistet ist.

Bei der erfindungsgemäßen Brennstoffzelle 2 bzw. dem erfindungsgemäßen Dichtungsaufbaus 14, 14a, 14b besteht die erste isolierende Schicht 14a der Dichtungsaufbaus 14 aus dem gleichen Material wie die Elektrolytschicht 3, da dieses Material zwar O²⁻ionendurchlässig, also "leitend" ist für O²⁻-Ionen, jedoch ein guter Isolator für Elektronen ist. Hierbei ist besonders vorteilhaft, dass die erste Schicht 14a (elektronische Isolierschicht) in einem Arbeitsgang mit dem Herstellen der Elektrolytschicht 3 lediglich durch einen erweiterten Verfahrbereich einer Plasmabeschichtungsdüse hergestellt werden kann. Der Verfahrbereich der Düse ist dabei derart gewählt, dass die Plasmabeschichtungsdüse zusätzlich zu dem Bereich der Elektrölytschicht 3 auch noch den Bereich sämtlicher erforderlicher Dichtstellen überfährt und dort Elektrolytmaterial anbringt.

Vorzugsweise werden vor dem Aufbringen der ersten Schicht 14a in den Dichtungsbereichen die betroffenen Oberflächenabschnitte der Separatorplatten 7, 8 beispielsweise mit Sandstrahlverfahren aufgerauht, damit eine mechanisch feste Anbindung des erfindungsgemäßen Dichtungsaufbaus 14, 14a, 14b an den Separatorplatten 7, 8 sichergestellt ist. Nach dem Auftragen der isolierenden Schicht 14a wird in bekannter Art und Weise die zweite Schicht 14b, z.B. aus einem hinsichtlich der Materialeigenschaften angepassten pastösen Glaskeramiklot, z.B. einem Glaskeramiklot oder als Folie aufgetragen. Üblicherweise werden diese Dichtungswerkstoffe als Pasten oder angelöste Folien vor dem Fügen des Brennstoffzellenstapels 1 auf die vorgesehenen Dichtflächen aufgetragen.

Gemäß einer besonders bevorzugten Ausführungsform ist die Elektrolytschicht 3 derart durchgängig bis in die Dichtungsbereiche verlängert ausgebildet, dass zumindest Teilbereiche der Elektrolytschicht 3 Teile der isolierenden ersten Schicht 14a des Dichtungsaufbaus 14, 14a, 14b bilden (Fig.1)

Mit dem Dichtungsaufbau 14, 14a 14b für einen-erfindungsgemäßen Brennstoffzellenstapel 1 werden somit alle bekannten Anforderungen an einen solchen Dichtungsaufbau (geringe Wasserstoff-Leckage-Raten, geringe elektrische Leitfähigkeit, gute Anbindung an die Bipolarplatten, Übereinstimmung der thermischen Ausdehnungskoeffizienten von Dichtung und Separatorplatten, chemische Beständigkeit gegenüber den zu dichtenden Medien, Betriebstemperaturbeständigkeit und an die Brennstoffzelle angepasstes Verformungsverhalten während des Fügeprozesses) in besonderem Maße zufriedenstellend erfüllt.

## Patentansprüche

1. Brennstoffzelle und/oder Elektrolyseur, insbesondere Festelektrolyt-Brennstoffzelle und/oder Festelektrolyt-Elektrolyseur, umfassend einen Dichtungsaufbau für eine Brennstoffzelle und/oder einen Elektrolyseur, insbesondere eine Festelektrolytbrennstoffzelle und/oder einen Festelekttolytelektrolyseur, wobei der Dichtungsaufbau (14a, 14b) zwischen benachbarten Separatorplatten (7, 8) eines Zellenstapels (1) angeordnet ist, wobei der Dichtungsaufbau (14, 14a, 14b) zumindest zweischichtig ausgebildet ist und aus zumindest einer Isolierschicht (14a) und zumindest einer Dichtungsschicht (14b) aufgebaut ist, wobei die Isolierschicht (14a) auf der Separatorplatte (7, 8) angeordnet ist, **dadurch gekennzeichnet, dass** die Isolierschicht (14a) ein elektronisch isolierender Keramikwerkstoff aus demselben Material wie der Elektrolyt (3) der Brennstoffzelle oder des Elektrolyseur ist.

2. Brennstoffzelle und/oder Elektrolyseur nach Anspruch 1, **dadurch gekennzeichnet, dass** die Isolierschicht (14a) aus Elektrolyt-Werkstoff besteht, insbesondere aus einem Y₂0₃-stabilisiertem Zirkoniumdioxid besteht.

3. Brennstoffzelle und/oder Elektrolyseur nach einem oder mehreren der vorhergehenden Ansprüche, **dadurch gekennzeichnet, dass** die Dichtungsschicht (14b) ein pastöser Dichtungswerkstoff, z.B. ein Glaskeramiklot oder ein Alkalisilicat-haltiger Hochtemperaturkeramikklebstoff ist.

4. Brennstoffzelle und/oder Elektrolyseur nach einem oder mehreren der vorangegangenen Ansprüche, **dadurch gekennzeichnet, dass** die Dichtungsschicht (14b) so beschaffen ist, dass die Dichtungsschicht (14b) dem thermischen Ausdehnungsverhalten des Materials einer Separatorplatte (7, 8) angepasst ist.

5. Brennstoffzelle und/oder Elektrolyseur nach einem oder mehreren der vorangegangenen Ansprüche, **dadurch gekennzeichnet, dass** die Zusatzmaterialien Metalle oder Metalloxide sind.

6. Brennstoffzelle und/oder Elektrolyseur nach einem oder mehreren der vorangegangenen Ansprüche, **dadurch gekennzeichnet, dass** der Dichtungsaufbau (14, 14a, 14b) in einem Brennstoffzellenstapel (1), bestehend aus Einzelbrennstoffzellen (2) angeordnet ist.

7. Brennstoffzelle und/oder Elektrolyseur nach einem oder mehreren der vorangegangenen Ansprüche, **dadurch gekennzeichnet, dass** die Einzelbrennstoffzellen (2) als Hochtemperaturbrennstoffzellen, insbesondere als Festelektrolyt-Brennstoffzellen (SOFC) mit einer Elektrolytschicht (3), einer Kathodenschicht (4) und einer Anodenschicht (5) ausgebildet sind.

8. Brennstoffzelle und/öder Elektrolyseur nach einem oder mehreren der vorangegangenen Ansprüche, **dadurch gekennzeichnet, dass** die elektrisch wirksamen Schichten (3, 4, 5) auf einer porösen metallischen Substratschicht angeordnet sind, welche als mechanisch tragende Schicht ausgebildet ist.

9. Brennstoffzelle und/oder Elektrolyseur nach einem oder mehreren der vorangegangenen Ansprüche, **dadurch gekennzeichnet, dass** die metallische Substratschicht porös ausgebildet ist, sodass Brenngas zur Anodenschicht (5) gelangen kann.

10. Brennstoffzelle und/oder Elektrolyseur nach einem oder mehreren der vorangegangenen Ansprüche, **dadurch gekennzeichnet, dass** die poröse metallische Substratschicht aus einem Nickelfilz oder einem FeCrAlY-Schaum ausgebildet ist.

11. Brennstoffzelle und/oder Elektrolyseur nach einem oder mehreren der vorangegangenen Ansprüche, **dadurch gekennzeichnet, dass** die Anodenschicht (5) aus einem Nickel/Yttrium-stabilisierten Zirkoniumdioxid (Ni-YSZ) Cermet-Material ausgebildet ist.

12. Brennstoffzelle und/oder Elektrolyseur nach einem oder mehreren der vorangegangenen Ansprüche, **dadurch gekennzeichnet, dass** die Elektrolytschicht (3) Sauerstoffionen-leitend ausgebildet ist.

13. Brennstoffzelle und/oder-Elektrolyseur nach einem oder mehreren der vorangegangenen Ansprüche, **dadurch gekennzeichnet, dass** die Elektrolytschicht (3) gasdicht ausgebildet ist.

14. Brennstoffzelle und/oder Elektrolyseur nach einem oder mehreren der vorangegangenen Ansprüche, **dadurch gekennzeichnet, dass** die Kathodenschicht (4) aus LantanStrontium-dotiertem Manganit (LSM) besteht.

15. Brennstoffzelle und/oder Elektrolyseur nach einem oder mehreren der vorangegangenen Ansprüche, **dadurch gekennzeichnet, dass** die Kathodenschicht (4) und die Anodenschicht (5) als poröse Schichten ausgebildet sind und insbesondere eine gradierte Materialzusammensetzung und gravierte Porosität aufweise.

16. Brennstoffzelle und/oder Elektrolyseur nach einem oder mehreren der vorangegangenen Ansprüche, **dadurch gekennzeichnet, dass** die elektrisch wirksamen Schichten (3, 4, 5) als Dünnschichtkeramik-Schichten ausgebildet sind.

17. Brennstoffzelle und/oder Elektrolyseur nach einem oder mehreren der vorangegangenen Ansprüche, **dadurch gekennzeichnet, dass** die Elektrolytschicht (3) eine Dicke von etwa 20-50 µm, insbesondere 20 µm aufweist.

18. Brennstoffzelle und/oder Elektrolyseur nach einem oder mehreren der vorangegangenen Ansprüche, **dadurch gekennzeichnet, dass** die Kathodenschicht (4) und die Anodenschicht (5) eine Dicke von etwa 20-50 µm aufweisen.

19. Brennstoffzelle und/oder Elektrolyseur nach einem oder mehreren der vorangegangenen Ansprüche, **dadurch gekennzeichnet, dass** eine Kontaktierungsschicht (6) vorhanden ist, welche aus einem porösen und im Montagezustand duktilen Material besteht.

20. Brennstoffzelle und/oder Elektrolyseur nach einem oder mehreren der vorangegangenen Ansprüche, **dadurch gekennzeichnet, dass** der zweischichtige Dichtungsaufbau (14a, 14b), insbesondere die Dichtungsschicht (14b) an die Kompressibilität und/oder das Schrumpfungsverhalten der Kontaktierungsschicht (6) angepasst ist.

21. Brennstoffzelle und/oder Elektrolyseur nach einem oder mehreren der vorangegangenen Ansprüche, **dadurch gekennzeichnet, dass** zur Ausbildung der Isolierschicht (14a) die Elektrolytschicht (3) derart bis in Dichtungsbereiche verlängert ausgebildet ist, dass zumindest Teilbereiche der Elektrolytschicht (3) zumindest Teile der Isolierschicht (14a) des Dichtungsaufbaus (14, 14a, 14b) bilden.

22. Brennstoffzelle und/oder Elektrolyseur nach einem oder mehreren vorangegangenen Ansprüche, **dadurch gekennzeichnet, dass** der Ausdehnungskoeffizient der Isolierschicht (14a) im gesamten Einsatztemperaturbereich von Umgebungsbis Betriebstemperatur einer Brennstoffzelle (2) zwischen dem der Separatorplatten (7, 8) und dem des Werkstoffs der Dichtungsschicht (14b) liegen.

23. Verfahren zum Herstellen einer Brennstoffzelle und/oder eines Elektrolyseurs, insbesondere einer Festelektrolytbrennstoffzelle und/oder eines Festelektrolytelektrolyseurs mit einem Dichtungsaufbau nach einem oder mehreren der Ansprüche 1 bis 22, **dadurch gekennzeichnet, dass** eine Isolierschicht (14a) des Dichtungsaufbaus (14a, 14b) mittels einem Sprühverfahren auf vorbestimmte Dichtüngsbereiche von Separatorplatten (7, 8) einer Einzelbrennstoffzelle (2) aufgetragen wird und aus einem elektronisch isolierenden Keramikwerkstoff aus demselben Material wie der Elektrolyt (3) der Brennstoffzelle oder des Elektrolyseurs hergestellt wird.

24. Verfahren nach Anspruch 23, **dadurch gekennzeichnet, dass** zumindest die Isolierschicht (14a) mittels eines thermischen Beschichtungsverfahrens aufgetragen wird.

25. Verfahren nach Anspruch 23 und/oder 24, **dadurch gekennzeichnet, dass** das thermische Beschichtungsverfahren das gleiche Beschichtungsverfahren ist wie dasjenige, welches zum Auftragen einer Elektrolytschicht (3) einer Brennstoffzelle (2) verwendet wird.

26. Verfahren nach einem oder mehreren der Ansprüche 23 bis 25, **dadurch gekennzeichnet, dass** das thermische Beschichtungsverfahren Vakuumplasmaspritzen und/oder atmosphärisches Plasmaspritzen ist.

27. Verfahren nach einem oder mehreren der Ansprüche 23 bis 26, **dadurch gekennzeichnet, dass** die Isolierschicht (14a) in einem Arbeitsschnitt gemeinsam mit der Elektrolytschicht (3) aufgebracht wird.

28. Verfahren nach einem oder mehreren der Ansprüche 23 bis 27, **dadurch gekennzeichnet, dass** das Auftragen der Isolierschicht (14a) gleichzeitig mit dem Auftragen einer Elektrolytschiclit (3) oder vor oder nach dem Auftragen einer Elektrolytschicht (3) erfolgt.

29. Verfahren nach einem oder mehreren der Ansprüche 23 bis 28, **dadurch gekennzeichnet, dass** die Dichtuhgsbereiche der Separatorplatten (7, 8) vor dem beschichten mit der Isolierschicht (14a) aufgeraut werden, insbesondere mittels eines Sandstrahlverfahrens aufgeraut werden.

30. Verfahren nach einem oder mehreren der Ansprüche 23 bis 29, **dadurch gekennzeichnet, dass** das Verfahren zur Herstellung eines Festelektrolyt-Brennstoffzellenstapels (1) oder eines Festelektrolyt-Elektrolyseurstapels verwendet wird.

31. Verfahren nach einem oder mehreren der Ansprüche 23 bis 30, **dadurch gekennzeichnet, dass** die Isolierschicht (14a) in einem Arbeitsgang zusammen mit der Elektrolytschicht (3) durch einen erweiterten Verfahrbereich einer Plasmabeschichtungsdüse hergestellt wird.

32. Verfahren nach einem oder mehreren der Ansprüche 23 bis 31, **dadurch gekennzeichnet, dass** die Plasmadüse während der Beschichtung sämtliche erforderliche Dichtstellen überfährt und dort Elektrolytmaterial anbringt.

33. Verfahren nach einem oder mehreren der Ansprüche 23 bis 32, **dadurch gekennzeichnet, dass** nach dem Aufbringen der Isolierschicht (14a) die Dichtungsschicht (14b) aufgebracht wird.

## Claims

1. Fuel cell and/or electrolyser, in particular solid electrolyte fuel cell and/or solid electrolyte electrolyser, comprising a sealing structure for a fuel cell and/or an electrolyser, in particular a solid electrolyte fuel cell and/or solid electrolyte electrolyser, wherein the sealing structure (14a, 14b) is arranged between adjoining separator plates (7, 8) of a cell stack (1), wherein the sealing structure (14, 14a, 14b) comprises at least two layers and is constructed of at least one insulating layer (14a) and at least one sealing layer (14b), wherein the insulating layer (14a) is arranged on the separator plate (7, 8), **characterised in that** the insulating layer (14a) is an electronically insulating ceramic material consisting of the same material as the electrolyte (3) of the fuel cell or the electrolyser.

2. Fuel cell and/or electrolyser according to claim 1, **characterised in that** the insulating layer (14a) consists of an electrolyte material, in particular of a Y₂O₃-stabilized zirconium dioxide.

3. Fuel cell and/or electrolyser according to one or more of the preceding claims, **characterised in that** the sealing layer (14b) is a paste-like sealing material, e.g. a glass-ceramic solder or an alkali-silicate-containing high-temperature ceramic adhesive.

4. Fuel cell and/or electrolyser according to one or more of the preceding claims, **characterised in that** the sealing layer (14b) is such that the sealing layer (14b) is adapted to the thermal expansion behaviour of the material of a separator plate (7, 8).

5. Fuel cell and/or electrolyser according to one or more of the preceding claims, **characterised in that** the additives are metals or metal oxides.

6. Fuel cell and/or electrolyser according to one or more of the preceding claims, **characterised in that** the sealing structure (14, 14a, 14b) is arranged in a fuel cell stack (1) consisting of individual fuel cells (2).

7. Fuel cell and/or electrolyser according to one or more of the preceding claims, **characterised in that** the individual fuel cells (2) are formed as high-temperature fuel cells, in particular as solid electrolyte fuel cells (SOFCs) having an electrolyte layer (3), a cathode layer (4) and an anode layer (5).

8. Fuel cell and/or electrolyser according to one or more of the preceding claims, **characterised in that** the electrically effective layers (3, 4, 5) are arranged on a porous metallic substrate layer formed as a mechanically supporting layer.

9. Fuel cell and/or electrolyser according to one or more of the preceding claims, **characterised in that** the metallic substrate layer is formed to be porous, such that combustion gas can reach the anode layer (5).

10. Fuel cell and/or electrolyser according to one or more of the preceding claims, **characterised in that** the porous metallic substrate layer is formed of a nickel felt or a FeCrAlY foam.

11. Fuel cell and/or electrolyser according to one or more of the preceding claims, **characterised in that** the anode layer (5) consists of a nickel/yttrium-stabilized zirconium dioxide (Ni-YSZ) cermet material.

12. Fuel cell and/or electrolyser according to one or more of the preceding claims, **characterised in that** the electrolyte layer (3) is formed to be oxygen ion-conducting.

13. Fuel cell and/or electrolyser according to one or more of the preceding claims, **characterised in that** the electrolyte layer (3) is formed to be gas-tight.

14. Fuel cell and/or electrolyser according to one or more of the preceding claims, **characterised in that** the cathode layer (4) consists of lanthanum-strontium-doped manganite (LSM).

15. Fuel cell and/or electrolyser according to one or more of the preceding claims, **characterised in that** the cathode layer (4) and the anode layer (5) are formed as porous layers and, in particular, have a graded material composition and graded porosity.

16. Fuel cell and/or electrolyser according to one or more of the preceding claims, **characterised in that** the electrically effective layers (3, 4, 5) are formed as thin-film ceramic layers.

17. Fuel cell and/or electrolyser according to one or more of the preceding claims, **characterised in that** the electrolyte layer (3) has a thickness of approximately 20-50 µm, in particular 20 µm.

18. Fuel cell and/or electrolyser according to one or more of the preceding claims, **characterised in that** the cathode layer (4) and the anode layer (5) have a thickness of approximately 20-50 µm.

19. Fuel cell and/or electrolyser according to one or more of the preceding claims, **characterised in that** a contact layer (6) is present which consists of a porous material that is ductile in an assembly state.

20. Fuel cell and/or electrolyser according to one or more of the preceding claims, **characterised in that** the two-layer sealing structure (14a, 14b), in particular the sealing layer (14b), is matched to the compressibility and/or shrinking behaviour of the contact layer (6).

21. Fuel cell and/or electrolyser according to one or more of the preceding claims, **characterised in that**, for forming the insulating layer (14a), the electrolyte layer (3) is extended into sealing areas in such a way that at least partial areas of the electrolyte layer (3) form at least parts of the insulating layer (14a) of the sealing structure (14, 14a, 14b).

22. Fuel cell and/or electrolyser according to one or more of the preceding claims, **characterised in that** the coefficient of expansion of the insulating layer (14a), in the entire range of employed temperatures from ambient to operating temperature of a fuel cell (2), lies between that of the separator plates (7, 8) and that of the material of the sealing layer (14b).

23. Method for producing a fuel cell and/or an electrolyser, in particular a solid electrolyte fuel cell and/or a solid electrolyte electrolyser having a sealing structure according to one or more of the claims 1 to 22, **characterised in that** an insulating layer (14a) of the sealing structure (14a, 14b) is applied onto predetermined sealing areas of separator plates (7, 8) of an individual fuel cell (2) by a spraying process, and is produced from an electronically insulating ceramic material consisting of the same material as the electrolyte (3) of the fuel cell or the electrolyser.

24. Method according to claim 23, **characterised in that** at least the insulating layer (14a) is applied using a thermal coating process.

25. Method according to claim 23 and/or 24, **characterised in that** the thermal coating process is the same coating process as that used for applying an electrolyte layer (3) of a fuel cell (2).

26. Method according to one or more of the claims 23 to 25, **characterised in that** the thermal coating process is vacuum plasma spraying and/or atmospheric plasma spraying.

27. Method according to one or more of the claims 23 to 26, **characterised in that** the insulating layer (14a) is applied in one process step along with the electrolyte layer (3).

28. Method according to one or more of the claims 23 to 27, **characterised in that** the application of the insulating layer (14a) takes place simultaneously with the application of an electrolyte layer (3) or takes place prior or subsequent to the application of an electrolyte layer (3).

29. Method according to one or more of the claims 23 to 28, **characterised in that** the sealing areas of the separator plates (7, 8) are roughened prior to being coated with the insulating layer (14a), in particular by means of a sandblasting process.

30. Method according to one or more of the claims 23 to 29, **characterised in that** the method is used for producing a solid electrolyte fuel cell stack (1) or a solid electrolyte electrolyser stack.

31. Method according to one or more of the claims 23 to 30, **characterised in that** the insulating layer (14a) is applied in one process step along with the electrolyte layer (3) using an extended displacement area of a plasma coating nozzle.

32. Method according to one or more of the claims 23 to 31, **characterised in that** the plasma coating nozzle, during the coating process, travels over all required sealing locations and applies electrolyte material there.

33. Method according to one or more of the claims 23 to 32, **characterised in that** the sealing layer (14b) is applied subsequent to the application of the insulating layer (14a).

## Revendications

1. Pile à combustible et/ou électrolyseur, en particulier pile à combustible à électrolyte solide et/ou électrolyseur à électrolyte solide, comprenant une structure d'étanchement pour une pile à combustible et/ou un électrolyseur, en particulier pour une pile à combustible à électrolyte solide et/ou un électrolyseur à électrolyte solide, dans laquelle la structure d'étanchement (14a, 14b) est agencée entre des plaques séparatrices voisines (7, 8) d'un empilement de cellules (1), ladite structure d'étanchement (14, 14a, 14b) étant réalisée au moins à deux couches et constituée par au moins une couche isolante (14a) et au moins une couche d'étanchement (14b), ladite couche isolante (14a) étant agencée sur la plaque séparatrice (7, 8), **caractérisée en ce que** la couche isolante (14a) est une substance céramique électroniquement isolante, du même matériau que l'électrolyte (3) de la pile à combustible ou de l'électrolyseur.

2. Pile à combustible et/ou électrolyseur selon la revendication 1, **caractérisée en ce que** la couche isolante (14a) est en un matériau électrolyte, en particulier en dioxyde de zirconium stabilisé par Y₂O₃.

3. Pile à combustible et/ou électrolyseur selon l'une ou plusieurs des revendications précédentes, **caractérisée en ce que** la couche d'étanchement (14b) est un matériau d'étanchement pâteux, par exemple une brasure vitrocéramique ou une colle céramique à haute température contenant un silicate alcalin.

4. Pile à combustible et/ou électrolyseur selon l'une ou plusieurs des revendications précédentes, **caractérisée en ce que** la couche d'étanchement (14b) est ainsi réalisée que la couche d'étanchement (14b) est adaptée au comportement de dilatation thermique du matériau d'une plaque séparatrice (7, 8).

5. Pile à combustible et/ou électrolyseur selon l'une ou plusieurs des revendications précédentes, **caractérisée en ce que** les matériaux additionnels sont des métaux ou des oxydes métalliques.

6. Pile à combustible et/ou électrolyseur selon l'une ou plusieurs des revendications précédentes, **caractérisée en ce que** la structure d'étanchement (14, 14a, 14b) est agencée dans un empilement de piles à combustible (1), constitué de piles à combustible individuelles (2).

7. Pile à combustible et/ou électrolyseur selon l'une ou plusieurs des revendications précédentes, **caractérisée en ce que** les piles à combustible individuelles (2) sont réalisées sous forme de piles à combustible à haute température, en particulier de piles à combustibles à électrolyte solide (SOFC) avec une couche d'électrolyte (3), une couche de cathode (4) et une couche d'anode (5).

8. Pile à combustible et/ou électrolyseur selon l'une ou plusieurs des revendications précédentes, **caractérisée en ce que** les couches (3, 4, 5) actives sur le plan électrique sont agencées sur une couche de substrat métallique poreuse, qui est réalisée sous forme de couche mécaniquement porteuse.

9. Pile à combustible et/ou électrolyseur selon l'une ou plusieurs des revendications précédentes, **caractérisée en ce que** la couche de substrat métallique est réalisée poreuse, de sorte que le gaz combustible peut parvenir à la couche d'anode (5).

10. Pile à combustible et/ou électrolyseur selon l'une ou plusieurs des revendications précédentes, **caractérisée en ce que** la couche de substrat métallique poreuse est réalisée en un feutre de nickel ou une mousse de FeCrAlY.

11. Pile à combustible et/ou électrolyseur selon l'une ou plusieurs des revendications précédentes, **caractérisée en ce que** la couche d'anode (5) est réalisée en un matériau de type cermet avec du dioxyde de zirconium (Ni-YSZ) stabilisé au nickel/yttrium.

12. Pile à combustible et/ou électrolyseur selon l'une ou plusieurs des revendications précédentes, **caractérisée en ce que** la couche d'électrolyte (3) est réalisée de manière à conduire les ions oxygène.

13. Pile à combustible et/ou électrolyseur selon l'une ou plusieurs des revendications précédentes, **caractérisée en ce que** la couche d'électrolyte (3) est réalisée étanche aux gaz.

14. Pile à combustible et/ou électrolyseur selon l'une ou plusieurs des revendications précédentes, **caractérisée en ce que** la couche de cathode (4) est réalisée en manganite dopée au lanthane/strontium (LSM).

15. Pile à combustible et/ou électrolyseur selon l'une ou plusieurs des revendications précédentes, **caractérisée en ce que** la couche de cathode (4) et la couche d'anode (5) sont réalisées comme des couches poreuses et présentent en particulier une composition en matériau avec gradation et une porosité avec gradation.

16. Pile à combustible et/ou électrolyseur selon l'une ou plusieurs des revendications précédentes, **caractérisée en ce que** les couches (3, 4, 5) efficaces sur le plan électrique sont réalisés sous forme de couches minces en céramique.

17. Pile à combustible et/ou électrolyseur selon l'une ou plusieurs des revendications précédentes, **caractérisée en ce que** la couche d'électrolyte (3) présente une épaisseur d'environ 20 à 50 µm, en particulier 20 µm.

18. Pile à combustible et/ou électrolyseur selon l'une ou plusieurs des revendications précédentes, **caractérisée en ce que** la couche de cathode (4) et la couche d'anode (5) présentent une épaisseur d'environ 20 à 50 µm.

19. Pile à combustible et/ou électrolyseur selon l'une ou plusieurs des revendications précédentes, **caractérisée en ce qu'**il est prévu une couche de mise en contact (6) qui est constituée en un matériau poreux et ductile dans la situation de montage.

20. Pile à combustible et/ou électrolyseur selon l'une ou plusieurs des revendications précédentes, **caractérisée en ce que** la structure d'étanchement à deux couches (14a, 14b), en particulier la couche d'étanchement (14b), est adaptée à la compressibilité et/ou au comportement de retrait de la couche de mise en contact (6).

21. Pile à combustible et/ou électrolyseur selon l'une ou plusieurs des revendications précédentes, **caractérisée en ce que**, pour la réalisation de la couche isolante (14a), la couche d'électrolyte (3) est réalisée de façon prolongée jusque dans les zones d'étanchement, de telle façon que des zones partielles au moins de la couche d'électrolyte (3) forment des parties au moins de la couche isolante (14a) de la structure d'étanchement (14, 14a, 14b).

22. Pile à combustible et/ou électrolyseur selon l'une ou plusieurs des revendications précédentes, **caractérisée en ce que** le coefficient de dilatation de la couche isolante (14a), dans la totalité de la plage de température d'utilisation, depuis la température ambiante jusqu'à la température de service d'une pile à combustible (2), est situé entre celui des plaques séparatrices (7, 8) et celui du matériau de la couche d'étanchement (14b).

23. Procédé pour la fabrication d'une pile à combustible et/ou d'un électrolyseur, en particulier d'une pile à combustible à électrolyte solide et/ou d'un électrolyseur à électrolyte solide, avec une structure d'étanchement selon l'une ou plusieurs des revendications 1 à 22, **caractérisé en ce qu'**une couche isolante (14a) de la structure d'étanchement (14a, 14b) est appliquée au moyen d'un procédé de pulvérisation sur des zones étanchement prédéterminées de plaques séparatrices (7, 8) d'une pile à combustible individuelle (2) et réalisée d'une substance céramique électroniquement isolante du même matériau que l'électrolyte (3) de la pile à combustible ou de l'électrolyseur.

24. Procédé selon la revendication 23, **caractérisé en ce qu'**au moins la couche isolante (14a) est appliquée au moyen d'un processus de revêtement thermique.

25. Procédé selon la revendication 23 et/ou 24, **caractérisé en ce que** le processus de revêtement thermique est le même processus de revêtement que celui qui est utilisé pour appliquer une couche d'électrolyte (3) d'une pile à combustible (2).

26. Procédé selon l'une ou plusieurs des revendications 23 à 25, **caractérisé en ce que** le processus de revêtement thermique est un processus de pulvérisation par plasma sous vide et/ou un processus de pulvérisation par plasma atmosphérique.

27. Procédé selon l'une ou plusieurs des revendications 23 à 26, **caractérisé en ce que** la couche isolante (14a) est appliquée dans une passe de travail conjointement avec la couche d'électrolyte (3).

28. Procédé selon l'une ou plusieurs des revendications 23 à 27, **caractérisé en ce que** l'application de la couche isolante (14a) a lieu simultanément avec l'application d'une couche d'électrolyte (3), ou encore avant ou après l'application d'une couche d'électrolyte (3).

29. Procédé selon l'une ou plusieurs des revendications 23 à 28, **caractérisé en ce que** les zones d'étanchement des plaques séparatrices (7, 8) sont rendues rugueuses avant le revêtement avec la couche isolante (14a), en particulier au moyen d'un procédé de sablage.

30. Procédé selon l'une ou plusieurs des revendications 23 à 29, **caractérisé en ce que** l'on utilise le procédé pour la réalisation d'un empilement de piles à combustible à électrolyte solide (1) ou d'un empilement d'électrolyseurs à électrolyte solide.

31. Procédé selon l'une ou plusieurs des revendications 23 à 30, **caractérisé en ce que** la couche isolante (14a) est réalisée dans une base de travail conjointement avec la couche d'électrolyte (3) en élargissant la plage de mobilité d'une buse de revêtement au plasma.

32. Procédé selon l'une ou plusieurs des revendications 23 à 31, **caractérisé en ce que** la buse à plasma circule pendant le revêtement par-dessus la totalité des emplacements d'étanchement nécessaires et applique le matériau de l'électrolyte sur ceux-ci.

33. Procédé selon l'une ou plusieurs des revendications 23 à 32, **caractérisé en ce que** la couche d'étanchement (14b) est appliquée après l'application de la couche isolante (14a).
